(19) Europäisches Patentamt / European Patent Office / Office européen des brevets

(11) **EP 3 404 481 B1**

(12) **FASCICULE DE BREVET EUROPEEN**

(45) Date de publication et mention
de la délivrance du brevet:
**21.07.2021 Bulletin 2021/29**

(51) Int Cl.:
*G03B 17/02* *(2021.01)*     *B60R 11/04* *(2006.01)*
*G02B 27/00* *(2006.01)*     *B08B 7/00* *(2006.01)*

(21) Numéro de dépôt: **18171895.8**

(22) Date de dépôt: **11.05.2018**

(54) **DISPOSITIF DE PROTECTION D'UN CAPTEUR OPTIQUE ET SYSTÈME D'ASSISTANCE À LA CONDUITE ASSOCIÉ**

SCHUTZVORRICHTUNG EINES OPTISCHEN SENSORS, UND ENTSPRECHENDES LENKASSISTENZSYSTEM

DEVICE FOR PROTECTING AN OPTICAL SENSOR AND ASSOCIATED DRIVING-ASSISTANCE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2017 FR 1754343**

(43) Date de publication de la demande:
**21.11.2018 Bulletin 2018/47**

(73) Titulaire: **Valeo Systèmes d'Essuyage**
**78322 Le Mesnil Saint Denis (FR)**

(72) Inventeurs:
• TREBOUET, Marcel
**78322 Le Mesnil Saint Denis (FR)**
• BRETAGNOL, Frédéric
**63500 ISSOIRE (FR)**
• GRASSO, Giuseppe
**63500 ISSOIRE (FR)**
• GOSSELE, Frederic
**93012 BOBIGNY Cedex (FR)**
• GARNIER, Denis
**93012 BOBIGNY (FR)**
• PINCHON, Nicolas
**93012 BOBIGNY (FR)**

(74) Mandataire: **Valeo Visibility**
**Service Propriété Intellectuelle**
**34 rue Saint André**
**93012 Bobigny (FR)**

(56) Documents cités:
KR-A- 20070 034 729     US-A- 3 879 742
US-A- 5 315 333     US-A1- 2007 217 782
US-A1- 2011 181 725

EP 3 404 481 B1

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant un objectif, notamment comprenant au moins une lentille. Plus particulièrement, l'invention concerne un dispositif de protection d'un tel capteur optique.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connaît des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des couts de fonctionnement d'un tel système d'assistance à la conduite car ils nécessitent l'utilisation de quantités de liquide de nettoyage assez importantes.

Selon une solution connue, des moyens de vibration d'une vitre de protection de la caméra sont prévus afin d'en décoller les saletés de la vitre de protection de la caméra. Toutefois, il a été constaté que l'efficacité d'un tel dispositif pour des salissures tenaces et incrustées peut être limitée malgré la vibration de la vitre de protection.

Selon une autre solution, la caméra est agencée dans un dispositif de protection. Cependant, un tel dispositif de protection est très encombrant à installer. Dans une variante connue par exemple de KR20070034729, le dispositif de protection peut être entraîné en rotation pour éliminer l'eau ou les salissures par l'effet de la force centrifuge.

La présente invention se propose de remédier au moins partiellement aux inconvénients ci-dessus mentionnés en présentant une alternative d'un dispositif de protection d'un capteur optique permettant d'empêcher le dépôt de salissures sur le capteur optique tel qu'une caméra.

À cet effet l'invention a pour objet un dispositif de protection d'un capteur optique pour véhicule automobile, ledit capteur optique comprenant une optique, caractérisé en ce que le dispositif comporte :

- un boitier monté mobile en rotation autour d'un axe de rotation et présentant un logement configuré pour recevoir le capteur optique,
- un élément optique solidaire du boitier, l'élément optique présentant au moins une surface plane configurée pour être disposée dans le champ de vision du capteur optique et
- un actionneur couplé au boitier pour entrainer en rotation le boitier et l'élément optique et disposé à l'arrière du boîtier.

L'élément optique au moins en partie plan peut être réalisé de façon simple.

Ledit dispositif de protection du capteur optique peut en outre comporter une ou plusieurs caractéristiques suivantes, prises séparément ou en combinaison :

- l'élément optique est au moins partiellement transparent ;
- l'élément optique est configuré pour être disposé en amont du boitier face à une scène de route dont le capteur optique est configuré pour participer à la prise de vues ;
- ladite au moins une surface plane présente une étendue supérieure ou égale à celle du champ de vision du capteur optique ;
- l'élément optique est configuré pour être agencé de sorte que ladite au moins une surface plane est centrée par rapport au capteur optique ;
- l'élément optique comporte une surface interne et une surface externe opposées, respectivement au moins en partie planes dans le champ de vision du capteur optique ;
- la surface interne et/ou externe de l'élément optique est partiellement ou totalement plane dans tout le champ de vision de l'optique du capteur optique ;
- la surface interne et la surface externe sont parallèles.
- la surface interne présente une propriété antibuée, en particulier la surface interne de l'élément optique présente un revêtement antibuée.

- la surface interne et/ou externe présente au moins une propriété choisie dans la liste suivante: filtre infra-rouge, photocatalytique, hydrophobe, super hydrophobe, lipophobe, hydrophile, super hydrophile, résistance aux gravillons.

- l'élément optique est configuré pour être disposé en amont de l'optique du capteur optique de sorte que l'axe optique de l'élément optique soit confondu avec l'axe optique du capteur optique ;

- l'élément optique est disposé de façon centrée par rapport à l'axe de rotation du boitier ;

- le logement du boitier est configuré pour recevoir le capteur optique de sorte que l'axe optique du capteur optique soit confondu avec l'axe de rotation ;

- le logement pour le capteur optique est défini par une paroi du boitier ;

- la paroi est centrée autour de l'axe de rotation du boitier ;

- le boitier comporte au moins un orifice traversant ;

- l'actionneur est agencé à l'arrière du boitier.

L'invention concerne également un système d'assistance à la conduite comportant un capteur optique comprenant une optique. Selon l'invention, ledit système comporte en outre un dispositif de protection du capteur optique tel que défini précédemment.

Selon un mode de réalisation, l'élément optique est distinct du capteur optique.

Selon un aspect de l'invention, ladite au moins une surface plane du dispositif présente une étendue supérieure ou égale à celle du champ de vision du capteur optique.

Selon un autre aspect de l'invention, le capteur optique reçu dans le boitier présente un champ de vision d'angle strictement inférieur à 180°, en particulier, inférieur ou égal à 150°, notamment inférieur ou égal à 120°. En particulier, l'angle de champ de vision peut être compris entre 40° et 130°, de préférence entre 50° et 120°, par exemple de l'ordre de 110°.

Selon un autre exemple, le capteur optique reçu dans le boitier présente un champ de vision d'angle de l'ordre de 60°, notamment pour la prise de vues dans un angle mort.

D'autres caractéristiques et avantages de l'invention apparaitront plus clairement à la lecture de la description suivante, donnée à titre d'exemple illustratif et non limitatif, et des dessins annexés parmi lesquels :

- la figure 1 représente de façon schématique un véhicule automobile comprenant un système d'assistance à la conduite selon l'invention,
- la figure 2 est une vue en perspective d'un dispositif de protection d'un capteur optique du système d'assistance de la figure 1,
- la figure 3 est une vue en coupe longitudinale partielle du dispositif de protection de la figure 2,

- la figure 4 est une vue en coupe transversale d'une variante de réalisation d'un élément optique sensiblement plan de protection du capteur optique,
- la figure 5 est une courbe montrant la correspondance entre l'angle du champ de vision du capteur optique et le diamètre d'un élément optique sensiblement plan de protection du capteur optique,
- la figure 6 est une variante du dispositif de protection, et
- la figure 7 est une autre variante du dispositif de protection.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

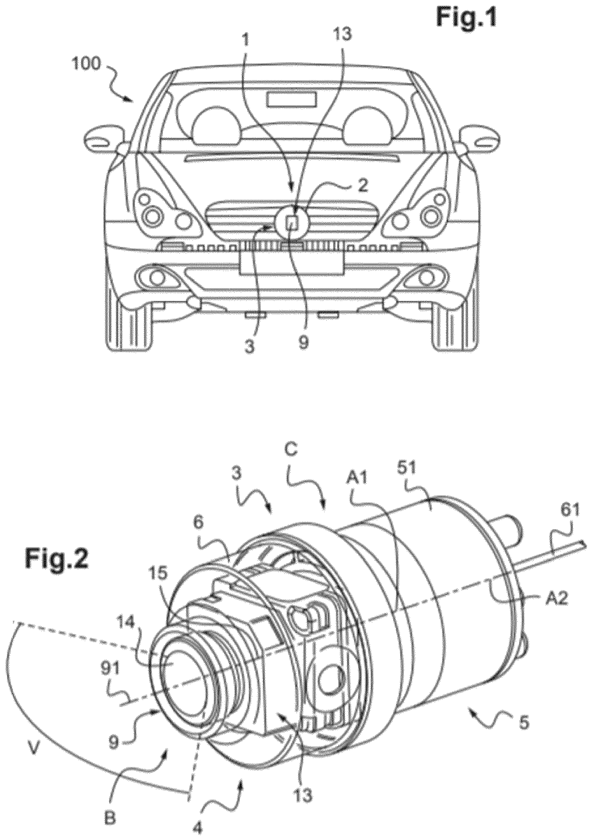

La figure 1 montre un véhicule automobile 100 équipé d'au moins un système d'assistance à la conduite 1 selon l'invention.

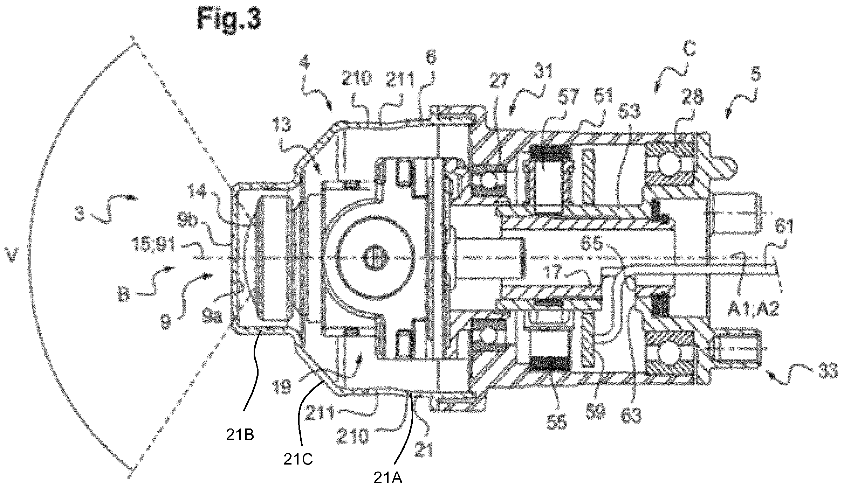

Le système d'assistance à la conduite 1 comporte notamment au moins un capteur optique 13 et un dispositif de protection 3 du capteur optique 13 mieux visible sur les figures 2 et 3.

Le capteur optique 13 est par exemple un capteur optique 13 de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light détection and ranging".

Comme cela est mieux visible sur les figures 2 et 3, le capteur optique 13 comporte une optique 14 d'axe optique 15. L'optique 14 est par exemple un objectif. Un objectif peut comporter au moins une lentille, en particulier plusieurs lentilles suivant le champ de vision et la résolution, par exemple entre deux et dix lentilles, généralement quatre ou cinq lentilles, voire dix lentilles dans le cas d'une optique dite œil de poisson ("fish-eye" en anglais). Au moins une des lentilles de l'optique 14 est par exemple convexe (bombée) de convexité orientée vers l'extérieur du capteur optique 13, telle qu'une optique dite œil de poisson ("fish-eye" en anglais).

Le capteur optique 13 peut comporter de plus une partie formant support 17 (figure 3) du capteur optique 13. Il s'agit ici d'une partie arrière du capteur optique 13 du côté opposé à l'optique 14.

Selon le mode de réalisation illustré, le capteur optique 13 est destiné à être monté dans le dispositif de protection 3. Plus précisément, le capteur optique 13 et notamment son support 17 sont destinés à être montés fixes dans le dispositif de protection 3.

Selon l'exemple illustré sur la figure 1, le dispositif de protection 3 est monté à l'avant du véhicule 100 au niveau d'un pare-chocs. Bien entendu, en variante le dispositif de protection 3 peut être monté à l'arrière du véhicule 100, par exemple au niveau du pare-chocs ou de la plaque d'immatriculation. Il peut aussi par exemple être monté sur les côtés du véhicule, par exemple au niveau des rétroviseurs.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

**Dispositif de protection**

Plus précisément, en se référant de nouveau aux figures 2 et 3, le dispositif de protection 3 comporte :

- au moins un accessoire 4 pour véhicule automobile 100 (en se référant également à la figure 1), cet accessoire 4 étant monté mobile en rotation autour d'un axe de rotation A1 et ayant pour fonction la protection du capteur optique 13, et
- un actionneur, plus précisément un moteur 5, configuré pour entrainer en rotation l'accessoire 4.

Le dispositif de protection 3 est donc un dispositif motorisé.

Notamment, le dispositif de protection 3 peut comporter un premier sous-ensemble B et un deuxième sous-ensemble C distincts et assemblés l'un à l'autre. Le premier sous-ensemble B peut former l'accessoire 4 pour véhicule automobile 100. Le deuxième sous-ensemble C peut comporter le moteur 5, pour entrainer en rotation le premier sous-ensemble B.

Accessoire

L'accessoire 4 ou moyen de protection peut être au moins partiellement transparent.

Selon le mode de réalisation décrit, l'accessoire 4, et plus généralement le dispositif de protection 3, comporte un boitier 6 et un élément optique 9 solidaire du boitier 6 (voir figures 2 et 3).

L'élément optique 9 peut être réalisé d'une seule pièce avec le boitier 6. En alternative, le boitier 6 et l'élément optique 9 peuvent être réalisés par deux pièces distinctes solidarisées.

L'élément optique 9 et le boitier 6 sont décrits plus en détail ci-après.

En ce qui concerne le boitier 6, il est monté mobile en rotation autour de l'axe de rotation A1.

De préférence, le boitier 6 est un boitier étanche. Le boitier 6 peut être réalisé en tout matériau approprié connu de l'homme du métier.

Plus précisément, ce boitier 6 est agencé de façon à être entrainé en rotation par le moteur 5, ce qui permet la rotation de l'élément optique 9. L'élément optique 9 est donc dans cet exemple particulier, configuré pour être entrainé en rotation avec le boitier 6, de façon à permettre un nettoyage de l'élément optique 9 par effet centrifuge.

L'élément optique 9 est configuré pour être disposé à l'avant du boitier 6. L'avant du boitier 6 s'entend de la partie du boitier 6 destinée à faire face à la scène de route dont le capteur optique 13 participe à la prise de vues, lorsque le dispositif de protection 3 est monté sur le véhicule 100 (en se référant également à la figure 1). Par opposition, l'arrière du boitier 6 s'entend de la partie du boitier 6 opposée à l'avant du boitier 6 et est donc la partie la plus éloignée de la scène de route dont le capteur optique 13 participe à la prise de vues.

De plus, le capteur optique 13 est dans cet exemple monté au moins en partie dans le boitier 6. Pour ce faire, le boitier 6 comporte un logement 19 (voir figure 3) configuré pour recevoir le capteur optique 13, par exemple de sorte que l'axe optique 15 du capteur optique 13, soit confondu avec l'axe de rotation A1 du boitier 6.

Plus précisément, le boitier 6 comporte une paroi 21 définissant le logement 19 pour le capteur optique 13. Cette paroi 21 peut être centrée autour de l'axe de rotation A1 de l'élément optique 9 et du boitier 6. Dans cet exemple, la paroi 21 est de forme générale sensiblement cylindrique.

Selon une première variante, la paroi 21 peut être réalisée d'une seule pièce avec l'élément optique 9. Selon une deuxième variante, la paroi 21 et l'élément optique 9 peuvent être réalisées par deux pièces distinctes, et dans ce cas la paroi 21 est solidarisée à une extrémité à l'élément optique 9. Il s'agit en particulier de l'extrémité avant de la paroi 21 qui est solidarisée à l'élément optique 9. À titre d'exemple non limitatif, la solidarisation entre la paroi 21 et l'élément optique 9 peut se faire par soudure par ultrasons. Ainsi, le boitier 6 et l'élément optique 9 peuvent être réalisés en une ou plusieurs pièces. Le boitier 6 étant solidaire de l'élément optique 9, cela forme un bloc étanche empêchant ainsi l'introduction de salissures à l'intérieur du boitier 6 destiné à recevoir le capteur optique 13.

Tel qu'illustré sur les figures, et notamment visible sur la figure 3, la paroi 21 délimitant le boîtier 6 présente un profil adapté à la forme du capteur optique 13 disposé dans le logement 19. La paroi 21 présente ainsi une première partie arrière 21A, tournée du côté du moteur 5 et qui présente un premier diamètre défini pour entourer le corps 13A du capteur optique de section carrée ou rectangulaire, et une deuxième partie avant 21B qui présente un deuxième diamètre inférieur au premier diamètre et ajusté autour d'une extrémité 13B de section circulaire du capteur optique. L'élément optique 9 est disposé à l'extrémité de la paroi 21, au niveau de cette deuxième partie 21B. Une portion tronconique 21C de la paroi 21 permet une liaison entre la première partie arrière et la deuxième partie avant.

Le dispositif de protection 3 est ménagé dans l'élément 2 du véhicule 100 de sorte que l'élément optique 9, disposé à l'extrémité de la paroi 21 correspondant à la deuxième partie avant de cette paroi, affleure avec la surface externe de l'élément 2 du véhicule 100, tel qu'un élément de carrosserie ou un élément extérieur tel qu'un pare-chocs, un rétroviseur ou une plaque d'immatriculation.

Selon l'invention, l'ouverture à réaliser dans l'élément 2 du véhicule pour le logement du dispositif de protection et le passage de l'élément optique 9 est réduite au deuxième diamètre de la deuxième partie avant 21B. Il est intéressant que le diamètre de cette ouverture présente une valeur la plus proche possible du diamètre de l'extrémité de section circulaire du capteur optique, afin que l'aspect visuel de l'élément 2 du véhicule soit sensiblement le même pour un véhicule qu'il soit équipé ou non d'un dispositif de protection autour du capteur optique.

L'aspect profilé du dispositif de protection, à savoir une deuxième partie avant 21B de plus petit diamètre que celui de la première partie arrière 21A, permet, dans le cas d'un élément optique 9 solidarisé à l'extrémité avant de la deuxième partie avant du boîtier 6, d'avoir une surface disposée en avant de l'optique 14 qui est essentiellement réalisée par l'élément optique 9, ce qui permet de rendre solidaire cet élément optique directement en bout du boîtier, sur des bords d'extrémités libres de la paroi, ce qui facilite l'opération de fixation.

Par ailleurs, la deuxième partie avant 21B porteuse de l'élément optique présentant un plus petit diamètre que celui de la première partie arrière, l'effet de balourd lors de la rotation de l'élément optique 9 est amoindri.

En variante ou en complément, on prévoit avantageusement au moins un moyen de limitation de la condensation, appelé par la suite moyen anti-condensation. Un tel moyen anti-condensation peut être prévu au niveau du boitier 6. En particulier, au moins un moyen anti-condensation peut être agencé sur la paroi 21 du boitier 6.

À titre d'exemple non limitatif, le moyen anti-condensation peut comprendre au moins un orifice 210 traversant au niveau du boitier 6, dans cet exemple sur la paroi 21 (voir figure 3). Le ou les orifices 210 peuvent être réalisés par perçage. De préférence, lorsque plusieurs orifices 210 sont prévus, ils sont agencés de façon symétrique par rapport à l'axe de rotation A1 du boitier 6.

Selon l'exemple illustré sur la figure 3, deux orifices 210 sont prévus, agencés de façon symétrique par rapport à l'axe de rotation A1 du boitier 6. Les orifices 210 communiquent entre l'intérieur du boitier 6 et l'extérieur du boitier 6 lorsque le dispositif de protection 3 est assemblé. À titre d'exemple non limitatif, chaque orifice 210 peut présenter un diamètre de l'ordre de 5mm.

De plus, on peut prévoir une ou plusieurs membranes 211 semi-perméables, respectivement agencées au moins au niveau d'un orifice 210. Selon l'exemple illustré sur la figure 3, deux membranes 211 sont représentées de façon schématique. Chaque membrane 211 peut être fixée sur un orifice 210 associé de manière étanche, par exemple par collage ou encore par soudure par ultrasons. Ces membranes 211 sont, selon les modes de réalisation décrits, perméables à l'air et imperméables à l'eau. La ou les membranes 211 favorisent ainsi la circulation de l'air à l'intérieur du boitier 6. Ceci permet une bonne ventilation entre l'optique 14 et l'élément optique 9 et empêche ainsi l'accumulation de condensation.

Avantageusement, on prévoit en outre au moins un moyen de compensation de la masse enlevée au niveau de l'orifice 210 ou des orifices 210. Selon l'exemple particulier illustré sur la figure 3, les deux membranes 211 sont placées de façon symétrique par rapport à l'axe de rotation A1 du boitier 6 et c'est cet agencement symétrique qui permet de limiter les effets de masse par rapport à la force centrifuge lors de la rotation du boitier 6.

L'élément optique 9, quant à lui, est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien des projections d'eau, de polluants, de graviers que des dépôts de polluants ou des traces d'eau.

Selon le mode de réalisation décrit, l'élément optique 9 est distinct du capteur optique 13.

Cet élément optique 9 présente un axe optique 91.

L'élément optique 9 est agencé à l'avant du dispositif de protection 3. Autrement dit, l'élément optique 9 est agencé à l'avant de l'accessoire 4, ou encore à l'avant du boitier 6. L'avant du dispositif de protection 3 s'entend de la partie destinée à faire face à la scène de route dont le capteur optique 13 participe à la prise de vues, lorsque le dispositif de protection 3 est monté sur le véhicule 100 (figure 1). Par opposition, l'arrière du dispositif de protection 3 est la partie opposée à l'avant ; il s'agit donc la partie la plus éloignée de la scène de route dont le capteur optique 13 participe à la prise de vues.

L'élément optique 9 est destiné à être disposé en amont du capteur optique 13, plus précisément en amont de l'optique 14 (figures 2 et 3). Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15.

Cet élément optique 9 est avantageusement dimensionné de façon à recouvrir toute la surface de l'optique 14. L'élément optique 9 est donc agencé dans le champ de vision du capteur optique 13. À cet effet, l'élément optique 9 est avantageusement transparent afin de ne pas nuire à l'efficacité du capteur optique 13. Cet élément optique 9 peut être réalisé en verre ou en un matériau plastique transparent tel que du polycarbonate.

L'élément optique 9 peut être agencé de façon centrée par rapport au capteur optique 13, plus précisément de façon centrée par rapport à l'optique 14. L'élément optique 9 est agencé de sorte que son axe optique 91 est confondu avec l'axe optique 15 du capteur optique 13.

Comme dit précédemment, l'élément optique 9 est solidaire du boitier 6, il est donc solidaire en rotation du boitier 6. Ainsi, l'élément optique 9 est également monté mobile en rotation autour de l'axe de rotation A1. Plus précisément, le boitier 6 peut être agencé de façon à être entrainé en rotation par le moteur 5, ce qui permet la rotation de l'élément optique 9. L'élément optique 9 est donc configuré pour être entrainé en rotation avec le boitier 6, de façon à permettre une protection de l'élément optique 9 par un effet centrifuge.

Avantageusement, l'axe de rotation A1 de l'élément optique 9 est confondu avec l'axe optique 15 du capteur optique 13. Cet axe de rotation A1 est également confondu avec l'axe optique 91 de l'élément optique 9.

L'élément optique 9 peut être disposé de façon centrée par rapport à l'axe de rotation A1. Cet élément optique 9 présente notamment une symétrie de révolution par rapport à l'axe de rotation A1.

Par ailleurs, lorsque le dispositif de protection 3 recevant le capteur optique 13 est monté sur le véhicule 100 (en se référant également à la figure 1), l'optique 14 et l'élément optique 9 font avantageusement saillie d'une ouverture prévue sur l'élément 2 du véhicule 100.

En outre, en se référant de nouveau à la figure 3, l'élément optique 9 présente au moins une surface 9a, 9b plane configurée pour être disposée dans le champ de vision V du capteur optique 13. L'au moins une surface 9a, 9b est sensiblement, voire totalement, plane dans tout le champ de vision V de l'optique 14 du capteur optique 13. Autrement dit, l'élément optique 9 est en partie plan ou complètement plan dans le champ de vision V du capteur optique 13.

La ou les surfaces planes 9a, 9b sont avantageusement centrées par rapport au capteur optique 13, plus précisément à l'optique 14.

En particulier, selon le mode de réalisation décrit, l'élément optique 9 comporte une surface interne 9a et une surface externe 9b opposées. Ces surfaces interne 9a et externe 9b se trouvent en partie ou complètement dans le champ de vision du capteur optique 13 lorsque le boitier 6 loge le capteur optique 13. En outre, chacune de ces surfaces 9a, 9b ou portions de surfaces qui se trouve dans le champ de vision V du capteur optique 13 est en partie ou complètement plane.

Selon l'exemple particulier illustré sur la figure 3, la surface interne 9a et 1a surface externe 9b sont parallèles.

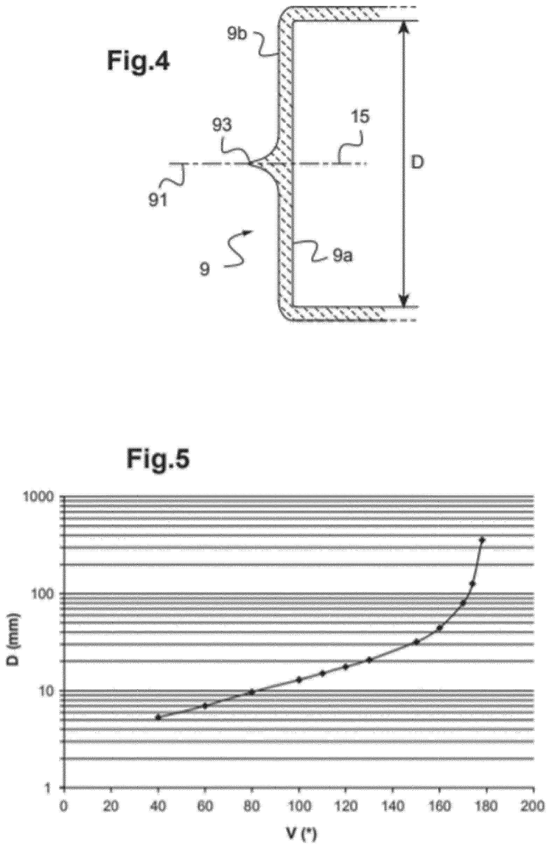

Selon une variante de réalisation illustrée sur la figure 4, l'élément optique 9 peut présenter un relief 93. En particulier dans cet exemple, le relief 93 présente une forme de pointe, ou une forme affinée. La distance sur laquelle s'étend le relief 93 peut être adaptée selon les besoins. De plus, ce relief 93, par exemple en pointe, est agencé sensiblement au centre de l'élément optique 9, c'est-à-dire au centre ou à proximité du centre, notamment de la surface externe 9b de l'élément optique 9. Autrement dit, le relief 93 est centré par rapport à l'axe optique 91 de l'élément optique 9, et donc par rapport à l'axe optique 15 du capteur optique 13. Cette discontinuité de la surface externe 9b de l'élément optique 9 permet de favoriser l'éjection de salissures, telles que des gouttes d'eau qui seraient situées au centre ou à proximité du centre de l'élément optique 9, autrement difficiles à éliminer car la vitesse de rotation du centre de l'élément optique 9 peut être trop faible, voire nulle, pour les éjecter.

En outre, en se référant aux figures 3 et 4, les surfaces planes 9a, 9b de l'élément optique 9 présentent une étendue D supérieure ou égale à celle du champ de vision V du capteur optique 13. Selon le mode de réalisation décrit, l'étendue D correspond au diamètre des surfaces sensiblement planes 9a, 9b de l'élément optique 9.

La figure 5 illustre de façon schématique des exemples de diamètre D maximum des surfaces sensiblement planes 9a, 9b de l'élément optique 9 en fonction de l'angle du champ de vision V du capteur optique 13, et pour une distance de l'ordre du millimètre entre la surface plane interne 9a et l'objectif 14. Bien entendu, si la distance entre la surface plane interne 9a et l'objectif 14 augmente, le diamètre D augmente également.

Notamment, le capteur optique 13 reçu dans le boitier 6 et agencé derrière les surfaces sensiblement planes 9a, 9b de l'élément optique 9, peut présenter un champ de vision V d'angle strictement inférieur à 180°. En particulier, le capteur optique 13 peut présenter un champ de vision V d'angle inférieur ou égal à 150°, notamment inférieur ou égal à 120°. En particulier, le capteur optique 13 peut présenter un champ de vision d'angle compris entre 40° et 130°, de préférence entre 50° et 120°, par exemple de l'ordre de 110°.

Selon un exemple illustratif non limitatif, les surfaces sensiblement planes 9a, 9b de l'élément optique 9 peuvent présenter un diamètre D de l'ordre de 15mm à 20mm. Avec un tel diamètre D, le capteur optique 13 en aval de l'élément optique 9 peut avoir un champ de vision V d'angle d'environ 110° à 130°.

D'autres exemples de correspondance entre le diamètre D en millimètre des surfaces sensiblement planes 9a, 9b de l'élément optique 9 et l'angle du champ de vision V du capteur optique 13 sont repris, à titre non limitatif, dans le tableau suivant :

| Champ de vision V (°) | Diamètre D (mm) |
|---|---|
| 178 | 360.48 |
| 174 | 127.32 |
| 170 | 80.36 |
| 160 | 44.42 |
| 150 | 31.8 |
| 130 | 20.68 |
| 120 | 17.5 |
| 110 | 15 |
| 100 | 12.96 |
| 80 | 9.66 |
| 60 | 7 |
| 40 | 5.3 |

Ces exemples sont donnés pour une distance entre la surface plane interne 9a et l'objectif 14 de l'ordre du millimètre. Comme dit précédemment, le diamètre D augmente si la distance entre la surface plane interne 9a et l'objectif 14 augmente.

On pourra se référer à la formule mathématique suivante lorsqu'il s'agit de déterminer le diamètre D lorsque la distance entre la surface plane interne 9a et l'objectif 14 augmente :

$$D = 2 \tan \frac{V}{2} * (e + d) + Do$$

avec :

- D : diamètre de l'élément optique
- V : champ de vision
- e : épaisseur de l'élément optique
- d : distance au centre entre la surface plane interne de l'élément optique et l'objectif du capteur optique
- Do : diamètre externe de l'objectif du capteur optique

Selon une application particulière, telle que la prise de vues dans un angle mort, notamment lorsque le dispositif de protection 3 logeant le capteur optique 13 dans le boitier 6 est agencé au niveau d'un rétroviseur latéral extérieur, le capteur optique 13 en aval d'un élément optique 9 partiellement ou totalement plan, peut présenter un champ de vision V plus restreint, par exemple d'angle de l'ordre de 60°, sans que cela ne soit gênant.

Bien entendu, dans le cas d'autres applications ou utilisations du système d'assistance à la conduite 1 (en se référant également à la figure 1), plusieurs dispositifs de protection 3 recevant chacun un capteur optique 13 en aval d'un élément optique 9 au moins en partie plan dans leur champ de vision respectif, peuvent être agencés. Cette disposition multiple avec plusieurs capteurs optiques 13 permet de garantir un grand champ de vision global, afin de permettre divers applications de l'assistance à la conduite nécessitant un grand angle de vue.

Par ailleurs, afin d'éviter un phénomène de condensation entre l'optique 14 et l'élément optique 9, la surface interne 9a de l'élément optique 9 présente avantageusement une propriété antibuée. La surface interne 9a de l'élément optique 9 est la surface destinée à être agencée en regard de l'optique 14 du capteur optique 13. En particulier la surface interne 9a de l'élément optique 9 présente un revêtement antibuée.

En variante ou en complément, la surface interne 9a et/ou externe 9b de l'élément optique 9 peut présenter une ou plusieurs des propriétés suivantes : hydrophobe, filtre infra-rouge, photocatalytique, super hydrophobe, lipophobe, hydrophile, ou encore super hydrophile, résistance aux gravillons, ou encore tout autre traitement de surface permettant de réduire l'adhésion des salissures. En particulier, grâce aux propriétés hydrophobes de la surface externe de l'élément optique 9, des gouttes d'eau éventuelles ruissèleront sur la surface externe sans laisser de traces car l'eau ne pourra pas adhérer sur cette surface externe. Ainsi, les couches ou revêtements sur la surface externe 9b l'élément optique 9, permettent de limiter les possibilités d'adhérence des polluants organiques ou minéraux ainsi que la présence de traces d'eau sur l'élément optique 9 pouvant nuire au bon fonctionnement du système d'assistance à la conduite 1. Avantageusement, une solution liquide, telle qu'une solution de type Rain-X®, peut être déposée sur la surface externe 9b de l'élément optique 9 afin de former une pellicule hydrophobe.

Ces exemples de réalisation sont fournis à titre illustratif et non limitatif. Par exemple, l'Homme du métier peut utiliser un élément optique 9 transparent présentant une surface externe 9b ayant d'autres propriétés permettant de limiter l'adhérence des salissures sur cette surface externe 9b sans sortir du cadre de la présente invention.

De manière optionnelle, l'élément optique 9 du dispositif de protection 3 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

Moteur

En ce qui concerne le moteur 5, dont différentes variantes sont représentées sur les figures 2, 3, 5 et 6, il peut s'agir notamment d'un moteur électrique de petite taille, voire miniature.

Par moteur électrique de petite taille on entend dans le cadre de la présente invention un moteur pas à pas, un actuateur, un moteur à courant continu avec ou sans balai, un moteur asynchrone ou un moteur synchrone, dont la masse est inférieure à 10kg, voire inférieure à 1kg, en particulier utilisés pour actionner des équipements pour les véhicules.

Par moteur électrique miniature on entend dans le cadre de la présente invention un moteur pas à pas, un actuateur, un moteur à courant continu avec ou sans balais, un moteur asynchrone ou un moteur synchrone, dont la masse est inférieure à 200g, voire inférieure à 100g, de préférence comprise entre 30 g et 100g, par exemple entre 30 g et 60g.

Le moteur 5 comporte un rotor 51 et un stator 53 fixe, le rotor 51 étant mobile en rotation par rapport au stator fixe 53.

Le moteur 5 est couplé au boitier 6 pour entrainer en rotation le boitier 6 et l'élément optique 9. Selon le mode de réalisation décrit, le boitier 6 et l'élément optique 9 sont solidaires du rotor 51 du moteur 5.

Selon le mode de réalisation illustré sur les figures 2, 3 et 5, le rotor 51 est disposé autour du stator 53. Le stator 53 est donc intérieur et le rotor 51 extérieur. Par ailleurs, dans l'exemple de la figure 5, le stator 53 peut former le support 17 du capteur optique 13. Autrement dit, le support 17 et le stator 53 sont réalisés d'une seule pièce.

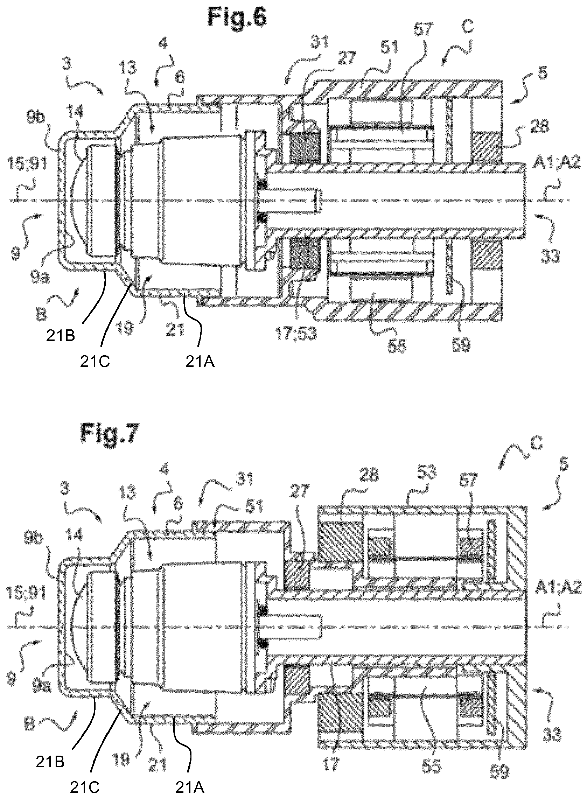

Alternativement, comme illustré sur la figure 6, le stator 53 peut être agencé autour du rotor 51.

Par ailleurs, le moteur 5 est assemblé à l'arrière du boitier 6. Selon le mode de réalisation décrit, le moteur 5 est agencé du côté opposé à l'élément optique 9. On forme ainsi un bloc étanche empêchant ainsi l'introduction de salissures à l'intérieur du boitier 6 destiné à recevoir le capteur optique 13.

En outre, le moteur 5 est dans cet exemple agencé dans le prolongement du capteur optique 13.

Le moteur 5 est avantageusement un moteur 5 creux. Il peut recevoir au moins en partie le capteur optique 13. Avantageusement, le moteur 5 creux est configuré pour recevoir une connectique du capteur optique 13, notamment pour l'alimentation et/ou traitement du signal.

En particulier, selon la configuration illustrée, c'est le stator 53 fixe du moteur 5 qui est creux et peut recevoir une partie du capteur optique 13, notamment une partie arrière du capteur optique 13 du côté opposé à l'optique 14, encore plus précisément il s'agit du support 17 fixe du capteur optique 13.

Le moteur 5 est par exemple alimenté électriquement par une alimentation reliée au circuit électrique général du véhicule 100 (en se référant également à la figure 1).

À titre d'exemple non limitatif, le moteur 5 peut être plus particulièrement un moteur sans balais, aussi connu sous la dénomination « brushless motor » en anglais. Selon l'exemple illustré sur la figure 3, le moteur 5 comprend au moins un aimant 55 solidaire en rotation du rotor 51, et un nombre prédéfini de bobines électromagnétiques 57, en particulier au moins trois bobines électromagnétiques 57 montées sur le stator 53. Les bobines électromagnétiques 57 sont destinées à être alimentées pour permettre l'entrainement de l'aimant 55 solidaire du rotor 51. Le moteur 5 comprend à cet effet un circuit de commande 59 pour l'alimentation des bobines électromagnétiques 57. Ce circuit de commande 59 peut être relié à un faisceau d'alimentation électrique 61 relié au circuit électrique général du véhicule 100 (en se référant également à la figure 1).

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1.

Selon le mode de réalisation illustré sur les figures 2 et 3, le moteur 5 est agencé à l'arrière du dispositif de protection 3. Autrement dit, le moteur 5 est agencé du côté opposé à l'élément optique 9.

Le moteur 5 est configuré pour entrainer en rotation l'accessoire 4, à savoir dans cet exemple le boitier 6 et l'élément optique 9 solidaire du boitier 6.

Le moteur 5 est monté rotatif autour d'un axe de rotation A2. Le moteur 5 est par exemple agencé de sorte que son axe de rotation A2 est confondu avec l'axe de rotation A1 de l'élément optique 9, et avec l'axe optique 15 du capteur optique 13.

Par ailleurs, on prévoit avantageusement, un agencement étanche à l'arrière du moteur 5 pour le passage des câbles ou fils afin de limiter l'entrée de vapeur d'eau et/ou autres contaminants à l'intérieur du dispositif de protection 3.

Le dispositif de protection 3 comporte donc une partie mobile 31, aussi appelée partie tournante 31, et une partie fixe 33 (voir figure 3).

La partie mobile 31 comprend au moins le rotor 51 du moteur 5, et la partie fixe 33 comprend au moins le stator 53 du moteur 5.

La partie mobile 31 du dispositif motorisé 3 peut comporter également au moins un élément mobile solidaire en rotation avec le rotor 51, tel que notamment l'accessoire 4, c'est-à-dire le boitier 6 et l'élément optique 9 dans cet exemple.

De même, la partie fixe 33 peut comprendre également un élément ou support fixé au stator 53. Bien entendu, l'élément ou support peut être fixé directement ou non au stator 53. De façon non limitative, dans cet exemple, la partie fixe 33 du dispositif motorisé 3 comporte le support 17 fixe du capteur optique 13. Ce support fixe 17 est notamment fixé au stator 53.

Le support 17 du capteur optique 13 et le stator 53 comportent avantageusement des ouvertures respectives complémentaires 63, 65 pour permettre le raccordement du circuit de commande 59 au faisceau d'alimentation électrique 61.

En outre, le dispositif de protection 3 peut comprendre en particulier un ou plusieurs roulements 27, 28 représentés de façon schématique sur les figures 3, 5, 6. Selon ces exemples, le dispositif de protection 3 comprend deux roulements 27, 28.

Ces roulements 27, 28 sont chacun agencés entre la partie mobile 31 et la partie fixe 33 du dispositif de protection 3. Les roulements 27, 28 sont de forme générale sensiblement annulaire. De plus, les deux roulements 27, 28 sont agencés de manière concentrique avec le moteur 5.

En se référant à l'exemple particulier illustré sur la figure 3, un des roulements, par exemple le roulement 27 peut être disposé entre le rotor 51 et une partie, notamment une partie avant, du support 17 du capteur optique 13. L'autre roulement, le roulement 28 dans l'exemple de la figure 3, est disposé entre le rotor 51 et le stator 53 du moteur 5.

En alternative, les deux roulements 27 et 28 peuvent être agencés entre le rotor 51 et le stator 53. Notamment, selon la variante de réalisation illustrée sur la figure 5, les deux roulements 27, 28 sont agencés entre le rotor 51 et le stator 53 formant support 17 du capteur optique 13.

Par ailleurs, au moins l'un de ces roulements 27, 28 peut être un roulement magnétique. Un tel roulement magnétique permet d'éviter le bruit et les frottements généralement provoqués en fonctionnement du dispositif de protection 3 utilisant des roulements mécaniques.

Selon une variante, un roulement peut être magnétique et l'autre roulement peut être un roulement mécanique tel qu'un roulement à billes. Selon une autre variante, le dispositif motorisé 3 peut comprendre un unique roulement magnétique.

Ainsi, en fonctionnement, l'actionneur, plus précisément le moteur 5, entraine en rotation le boitier 6 et l'élément optique 9 solidaire du boitier 6, par rapport au capteur optique 13. La rotation du boitier 6 et de l'élément optique 9 assure l'élimination des salissures du fait de la force centrifuge que ces dernières subissent. Le champ de vision V du capteur optique 13 est ainsi toujours dégagé et propre.

L'élément optique 9 au moins en partie plan peut être réalisé de façon simple. En outre, le diamètre D des surfaces sensiblement planes 9a, 9b de l'élément optique 9 en amont de l'optique 14 du capteur optique 13 peut être adapté par l'Homme du métier selon l'angle de vision nécessaire pour une application donnée dans le domaine de l'assistance à la conduite.

Enfin, le fait que l'élément optique 9 soit complètement ou en partie plan dans le champ de vision V du capteur optique 13 n'altère pas l'assistance à la conduite. Au contraire, ceci est particulièrement avantageux pour réaliser des systèmes compacts en diminuant le diamètre de l'élément optique 9, et notamment de ses surfaces sensiblement planes 9a, 9b, par exemple pour des applications ne nécessitant pas un très large champ de vision, comme la prise de vues dans un angle mort. De plus, les surfaces planes 9a, 9b, permettent de garder intactes ou quasiment intactes les performances optiques, notamment des performances de fonction de transfert de modulation, connue sous le sigle FTM en français ou MTF en anglais.

**Revendications**

1. Dispositif (3) d'un capteur optique (13) pour véhicule automobile (100), ledit capteur optique (13) comprenant une optique (14),

   - un boîtier (6) monté mobile en rotation autour d'un axe de rotation (A1) et présentant un logement (19) configuré pour recevoir le capteur optique (13),
   - un élément optique (9) solidaire du boîtier (6), l'élément optique (9) présentant au moins une surface plane (9a, 9b) configurée pour être disposée dans le champ de vision du capteur optique (13), et dont la position définit l'avant du boîtier, et
   - un actionneur (5) couplé au boîtier (6) pour entrainer en rotation le boîtier (6) et l'élément optique (9), le dispositif (3) étant **caractérisé en ce que** l'actionneur (5) est agencé à l'arrière du boîtier (6).

2. Dispositif (3) selon la revendication 1, dans lequel ladite au moins une surface plane (9a, 9b) présente une étendue (D) supérieure ou égale à celle du champ de vision (V) du capteur optique (13).

3. Dispositif (3) selon la revendication 1 ou 2, dans lequel l'élément optique (9) est configuré pour être agencé de sorte que ladite au moins une surface plane (9a, 9b) est centrée par rapport au capteur optique (13).

4. Dispositif (3) selon l'une quelconque des revendications précédentes, dans lequel l'élément optique (9) comporte une surface interne (9a) et une surface externe (9b) opposées, respectivement au moins en partie planes dans le champ de vision (V) du capteur optique (13).

5. Dispositif (3) selon l'une quelconque des revendications précédentes, dans lequel l'élément optique (9) est configuré pour être disposé en amont de l'optique (14) du capteur optique (13) de sorte que l'axe optique (91) de l'élément optique (9) soit confondu avec l'axe optique (15) du capteur optique (13).

6. Dispositif (3) selon l'une quelconque des revendications précédentes, dans lequel l'élément optique (9) est disposé de façon centrée par rapport à l'axe de rotation (A1) du boîtier (6).

7. Dispositif (3) selon l'une quelconque des revendications précédentes, dans lequel le logement (19) du boîtier (6) est configuré pour recevoir le capteur optique (13) de sorte que l'axe optique (15) du capteur optique (13) soit confondu avec l'axe de rotation (A1).

8. Dispositif (3) selon l'une quelconque des revendications précédentes, dans lequel le logement (19) pour le capteur optique (13) est défini par une paroi (21) du boîtier (6).

9. Dispositif (3) selon la revendication précédente, dans lequel la paroi (21) est centrée autour de l'axe de rotation (A1) du boîtier (6).

10. Système d'assistance à la conduite (1) comportant un capteur optique (13) comprenant une optique (14), **caractérisé en ce que** ledit système (1) comporte en outre un dispositif (3) du capteur optique (13) selon l'une quelconque des revendications précédentes.

11. Système d'assistance (1) selon la revendication précédente, dans lequel la surface plane (9a, 9b) du dispositif (3) présente une étendue supérieure ou égale à celle du champ de vision (V) du capteur optique (13).

12. Système d'assistance (1) selon l'une des revendications 10 ou 11, dans lequel le capteur optique (13) reçu dans le boîtier (6) présente un champ de vision (V) d'angle strictement inférieur à 180°.

**Patentansprüche**

1. Vorrichtung (3) eines optischen Sensors (13) für ein Kraftfahrzeug (100), wobei der optische Sensor (13) eine Optik (14) beinhaltet,

- ein Gehäuse (6), das drehbeweglich um eine Drehachse (A1) montiert ist und eine Aufnahme (19) aufweist, die dazu konfiguriert ist, den optischen Sensor (13) aufzunehmen,
- ein optisches Element (9), das mit dem Gehäuse (6) fest verbunden ist, wobei das optische Element (9) mindestens eine ebene Oberfläche (9a, 9b) aufweist, die dazu konfiguriert ist, im Sichtfeld des optischen Sensors (13) angeordnet zu sein, und deren Position die Vorderseite des Gehäuses definiert, und
- ein Betätigungselement (5), das mit dem Gehäuse (6) gekoppelt ist, um das Gehäuse (6) und das optische Element (9) in Drehung zu versetzen,

wobei die Vorrichtung (3) **dadurch gekennzeichnet ist, dass** das Betätigungselement (5) auf der Rückseite des Gehäuses (6) eingerichtet ist.

2. Vorrichtung (3) nach Anspruch 1, wobei die mindestens eine ebene Oberfläche (9a, 9b) eine Ausdehnung (D) aufweist, die größer als oder gleich der des Sichtfelds (V) des optischen Sensors (13) ist.

3. Vorrichtung (3) nach Anspruch 1 oder 2, wobei das optische Element (9) dazu konfiguriert ist, so eingerichtet zu sein, dass die mindestens eine ebene Oberfläche (9a, 9b) mit Bezug auf den optischen Sensor (13) zentriert ist.

4. Vorrichtung (3) nach einem der vorhergehenden Ansprüche, wobei das optische Element (9) eine Innenoberfläche (9a) und eine Außenoberfläche (9b), die sich gegenüberliegen, umfasst, die im Sichtfeld (V) des optischen Sensors (13) jeweils mindestens teilweise eben sind.

5. Vorrichtung (3) nach einem der vorhergehenden Ansprüche, wobei das optische Element (9) dazu konfiguriert ist, so vor der Optik (14) des optischen Sensors (13) angeordnet zu sein, dass die optische Achse (91) des optischen Elements (9) mit der optischen Achse (15) des optischen Sensors (13) zusammenfällt.

6. Vorrichtung (3) nach einem der vorhergehenden Ansprüche, wobei das optische Element (9) mit Bezug auf die Drehachse (A1) des Gehäuses (6) zentriert angeordnet ist.

7. Vorrichtung (3) nach einem der vorhergehenden Ansprüche, wobei die Aufnahme (19) des Gehäuses (6) dazu konfiguriert ist, den optischen Sensor (13) so aufzunehmen, dass die optische Achse (15) des optischen Sensors (13) mit der Drehachse (A1) zusammenfällt.

8. Vorrichtung (3) nach einem der vorhergehenden Ansprüche, wobei die Aufnahme (19) für den optischen Sensor (13) durch eine Wand (21) des Gehäuses (6) definiert ist.

9. Vorrichtung (3) nach dem vorhergehenden Anspruch, wobei die Wand (21) um die Drehachse (A1) des Gehäuses (6) zentriert ist.

10. Lenkassistenzsystem (1), das einen optischen Sensor (13) umfasst, der eine Optik (14) beinhaltet, **dadurch gekennzeichnet, dass** das System (1) ferner eine Vorrichtung (3) des optischen Sensors (13) nach einem der vorhergehenden Ansprüche umfasst.

11. Assistenzsystem (1) nach dem vorhergehenden Anspruch, wobei die ebene Oberfläche (9a, 9b) der Vorrichtung (3) eine Ausdehnung aufweist, die größer als oder gleich der des Sichtfelds (V) des optischen Sensors (13) ist.

12. Assistenzsystem (1) nach einem der Ansprüche 10 oder 11, wobei der optische Sensor (13), der in dem Gehäuse (6) aufgenommen ist, ein Sichtfeld (V) mit einem Winkel, der in jedem Fall kleiner als 180° ist, aufweist.

**Claims**

1. Device (3) for an optical sensor (13) for a motor vehicle (100), said optical sensor (13) comprising an optic (14),

   - a housing (6) that is mounted so as to be able to rotate around an axis of rotation (A1) and that has a compartment (19) that is configured to accommodate the optical sensor (13);
   - an optical element (9) that is securely fastened to the housing (6), the optical element (9) having at least one planar surface (9a, 9b) that is configured to be placed in the field of view of the optical sensor (13), and the position of the optical element (9) defined the front of the housing (6); and
   - an actuator (5) that is coupled to the housing (6) in order to drive the housing (6) and the optical element (9) to rotate,

   the device (3) **characterized in that** the actuator (5) is arranged at the rear of the housing (6).

2. Device (3) according to Claim 1, wherein said at least one planar surface (9a, 9b) has an extent (D) larger than or equal to the extent of the field of view (V) of the optical sensor (13).

3. Device (3) according to Claim 1 or 2, wherein the optical element (9) is configured to be arranged so that said at least one planar surface (9a, 9b) is centred with respect to the optical sensor (13).

4. Device (3) according to any one of the preceding claims, wherein the optical element (9) includes an internal surface (9a) and an external surface (9b) that are opposite and respectively at least partially planar in the field of view (V) of the optical sensor (13).

5. Device (3) according to any one of the preceding claims, wherein the optical element (9) is configured to be placed upstream of the optic (14) of the optical sensor (13) so that the optical axis (91) of the optical element (9) is coincident with the optical axis (15) of the optical sensor (13).

6. Device (3) according to any one of the preceding claims, wherein the optical element (9) is placed centred with respect to the axis of rotation (A1) of the housing (6).

7. Device (3) according to any one of the preceding claims, wherein the compartment (19) of the housing (6) is configured to accommodate the optical sensor (13) so that the optical axis (15) of the optical sensor (13) is coincident with the axis of rotation (A1).

8. Device (3) according to any one of the preceding claims, wherein the compartment (19) for the optical sensor (13) is defined by a wall (21) of the housing (6).

9. Device (3) according to the preceding claim, wherein the wall (21) is centred on the axis of rotation (A1) of the housing (6).

10. Driver-assistance system (1) including an optical sensor (13) comprising an optic (14), **characterized in that** said system (1) furthermore includes a device (3) for the optical sensor (13) according to any one of the preceding claims.

11. Driver-assistance system (1) according to the preceding claim, wherein the planar surface (9a, 9b) of the device (3) has an extent larger than or equal to the extent of the field of view (V) of the optical sensor (13).

12. Driver-assistance system (1) according to either of Claims 10 and 11, wherein the optical sensor (13) accommodated in the housing (6) has a field of view (V) of angle strictly smaller than 180°.

**Fig.1**

100

1    13

2

3    9

**Fig.2**

C

3    A1    51

6    61

15    A2

14

91    5

V    9

B    13

4

Fig.3

EP 3 404 481 B1

**Fig.4**

**Fig.5**

# Fig.6

# Fig.7

## RÉFÉRENCES CITÉES DANS LA DESCRIPTION

**Documents brevets cités dans la description**

- KR 20070034729